Europäisches Patentamt

European Patent Office

Office européen des brevets

(11) Numéro de publication: **0 296 079**
**A1**

# DEMANDE DE BREVET EUROPEEN

(21) Numéro de dépôt: 88420195.5

(22) Date de dépôt: 14.06.88

(51) Int. Cl.⁴: **B 62 M 25/04**

(30) Priorité: 16.06.87 FR 8708676

(43) Date de publication de la demande:
21.12.88 Bulletin 88/51

(84) Etats contractants désignés:
AT BE CH DE ES GB GR IT LI LU NL SE

(71) Demandeur: **ETABLISSEMENTS LE SIMPLEX (Société à Responsabilité Limitée)**
**Rue Jean Moulin Zône Industrielle Couchey**
**F-21160 Marsannay La Cote** (FR)

(72) Inventeur: **Juy, Henri**
**43, rue Chabot Charny**
**F-21000 Dijon** (FR)

(74) Mandataire: **Dupuis, François**
**Cabinet Charras 3 Place de l'Hôtel-de-Ville BP 203**
**F-42005 St. Etienne Cédex 1** (FR)

(54) Dispositif de débrayage du système d'indexation de l'organe de commande des changements de vitesse pour cycles et véhicules similaires.

(57) Le dispositif est remarquable en ce que le système d'indexation met en oeuvre essentiellement un secteur cranté à course angulaire limitée (5) et un secteur cranté mobile (8) agencé pour être entraîné en rotation sous l'action du pivotement angulaire du levier (4), le secteur mobile (8) étant assujetti à des moyens de commande (11) et (10) conformés pour assurer à volonté son déplacement limité en translation en vue de mettre en prise ou pas les crans desdits secteurs (5) et (8) pour correspondre à une position d'indexation du levier ou à une position de débrayage du levier.

EP 0 296 079 A1

## Description

### Dispositif de débrayage du système d'indexation de l'organe de commande des changements de vitesse pour cycles et véhicules similaires.

L'objet de l'invention se rattache au secteur des accessoires et équipements de cycles, notamment des changements de vitesse et leur moyen de commande.

De plus en plus, les changements de vitesse pour cycle sont conformés avec des systèmes permettant de présélectionner et d'indexer les vitesses, soit à l'arrêt, soit en cours de pédalage. On peut citer par exemple la demande de brevet européen n.0.186.602 dont le demandeur de la présente est également titulaire.

Avec ce type de changement de vitesse, il est apparu nécessaire de pouvoir débrayer à volonté le système d'indexation pour retrouver un fonctionnement classique. Cela peut s'avérer intéressant dans le cas par exemple où il se produit temporairement un déréglage du système d'indexation.

On connaît par la Demande de Brevet européen 0 157 983, une solution apte à résoudre ce problème. Cependant, la solution proposée est d'une relative complexité augmentant considérablement le coût. En outre, compte tenu des moyens spécifiques de mise en oeuvre, notamment des systèmes de billes, le dispositif de changement de vitesse décrit dans cette Demande de Brevet, est pratiquement irréparable. En effet, en cas d'anomalie de fonctionnement, après démontage, il s'avère très difficile, voir impossible, de remettre correctement en place les différentes pièces constitutives, même en faisant appel à des personnes qualifiées.

Pour remédier à ces inconvénients, l'invention s'est fixée pour but, d'une manière simple, efficace et rationnelle, la mise au point d'un dispositif qui permette à volonté le fonctionnement du levier de manoeuvre ou manette d'un changement de vitesse, d'une manière indexée, c'est-à-dire avec des positions préétablies correspondant à un nombre sélectionné de vitesse, ou bien d'une manière classique, c'est-à-dire sans "marquage" de chaque passage de vitesse.

Plus particulièrement, le dispositif est du type de ceux conformés pour déplacer transversalement un guide-chaîne par rapport aux pignons étagés solidaires du moyeu de la roue arrière, ledit changement de vitesses étant relié par câble à un organe de commande du type à levier notamment en étant conformé et agencé pour coopérer avec le système de commande de réglage et d'indexation aptes à assurer dans un premier temps, la mise sous tension ou détension du câble à chaque inversion du sens du levier et, dans un deuxième temps, à agir sur ledit câble pour de déplacement transversal du guide-chaîne pour le passage et la sélection d'une ou plusieurs vitesses, le système d'indexation mettant en oeuvre essentiellement un secteur cranté à course angulaire limité et un secteur cranté mobile agencé pour être entraîné en rotation sous l'action du pivotement angulaire du levier.

Selon l'invention, le système d'indexation mettant en oeuvre essentiellement un secteur cranté fixe et un secteur cranté mobile est remarquable en ce que le secteur mobile est assujetti à des moyens de commande constitués respectivement par un bouton de manoeuvre et un disque indexé angulairement dont les faces en regard présentent d'une manière complémentaire des agencements conformés pour provoquer en combinaison avec des organes élastiques de rappel, l'engrènement ou pas des crans des secteurs en fonction de la position angulaire dudit bouton de manoeuvre pour mettre en prise ou pas les crans desdits secteurs pour correspondre à une position d'indexation du levier ou à une position de débrayage du levier.

Il en résulte une fiabilité de fonctionnement engendrée par la simplicité des moyens de mise en oeuvre en constituant un dispositif sûr et efficace.

L'invention est exposée ci-après plus en détail à l'aide des dessins annexés dans lesquels :

La figure 1 est une vue en perspective illustrant séparément et alignés selon leur ordre de montage, les principaux éléments du dispositif de commande du changement de vitesse selon l'invention.

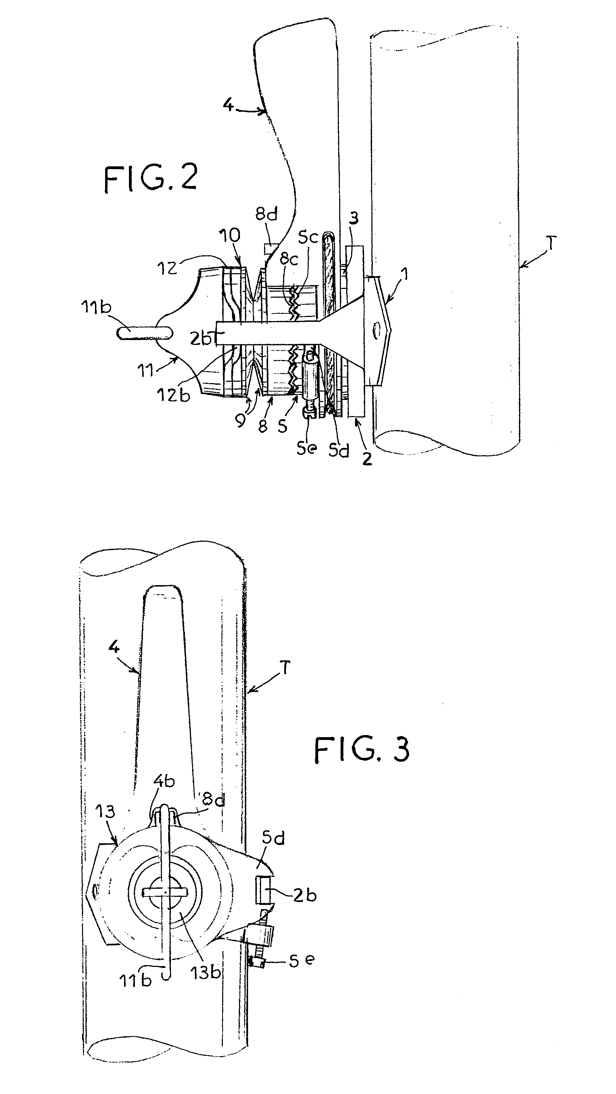

La figure 2 est une vue de profil montrant le dispositif en position débrayée.

La figure 3 est une vue de face du dispositif de commande du changement de vitesse.

La figure 4 est une vue en coupe à plus grande échelle montrant le dispositif en position débrayée.

La figure 5 est une vue en coupe semblable à la figure 4 illustrant le dispositif en position embrayée.

La figure 6 est une vue arrière du bouton de manoeuvre du dispositif d'embrayage-débrayage.

La figure 7 est une vue en coupe partielle considérée suivant la ligne 7.7. de la figure 6.

La figure 8 est une vue avant du disque du dispositif d'embrayage-débrayage.

La figure 9 est une vue en coupe partielle considérée suivant la ligne 9.9. de la figure 8.

Afin de rendre plus concret l'objet de l'invention, on le décrit maintenant sous une forme non limitative de réalisation illustrée aux figures des dessins.

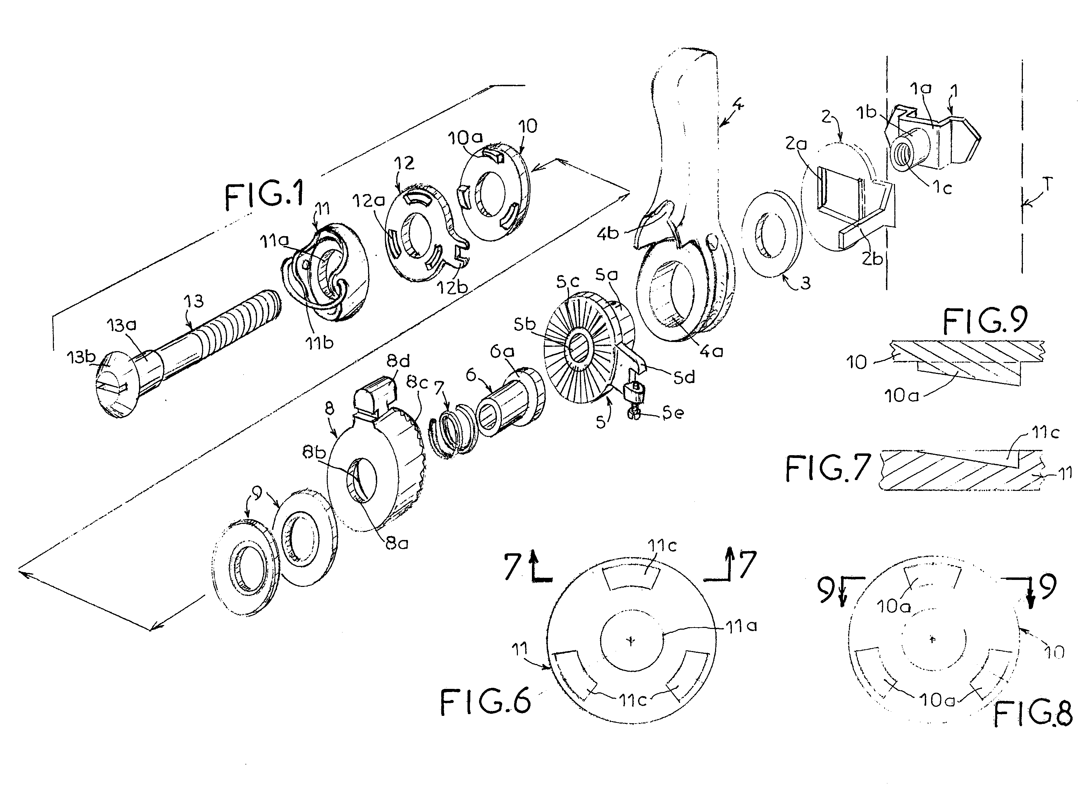

En se référant plus particulièrement à la figure 1, on décrit les différents éléments du dispositif de commande du changement de vitesse selon leur ordre de montage.

D'une manière connue, le dispositif est monté sur un collier adaptable autour d'un tube du cadre ou, comme illustré sur un plot (1) soudé, brasé, rivé ou collé sur un tube (T) du cadre. A cet effet, le plot présente une portée polygonale (1a) pour le montage et l'indexation angulaire d'un secteur (2) comprenant une ouverture complémentaire (2a), ainsi qu'un prolongement latéral (2b) dont l'utilité ressortira de la suite de la description.

Une rondelle plate (3) est placée devant le secteur (2) concentriquement à une portée cyclindrique (1b) du plot ou du collier ; en regard de la rondelle (3) est monté le levier de changement de vitesse (4) dont l'alésage (4a) est engagé à rotation libre sur une portée cylindrique arrière (5a) d'un secteur profilé (5). L'alésage (5b) du secteur (5) tourillonne librement sur la portée (1b) du plot et présente une patte latérale (5d) qui s'engage sur le prolongement (2b) pour être indexé en rotation de manière réglable par vis (5e). La face avant du secteur (5) coopère en appui avec un épaulement (6a) d'un manchon entretoise (6) qui reçoit un ressort à boudin (7) comprimé entrele dit épaulement (6a) et une paroi de fond (8a) d'un alésage (8b) formé dans l'épaisseur d'un secteur mobile (8). Des rondelles élastiques (9) sont montées autour du manchon-entretoise (6) en appui sur le secteur mobile (8). Ces rondelles sont comprimées par un disque (10) et un bouton de manoeuvre (11) faisant partie du dispositif d'embrayage-débrayage.

Le manchon-entretoise (6) est également maintenu fermement en appui contre le secteur (5) par une pièce fixe (12) intercalée entre le disque (10) et le bouton (11) en appui sur un épaulement (13a) formé sous la tête (13b) d'une vis (13). Cette vis traverse la pièce (12), le manchon-entretoise (6) et se visse dans un taraudage (1c) du plot (1) afin d'assembler tous les éléments d'une manière connue.

La pièce (12) est bloquée en rotation au moyen d'une échancrure (12b) coopérant avec le prolongement (2b) du secteur de base (2).

Le bouton de manoeuvre (11) est ainsi retenu entre la pièce (12) et la tête de vis (13b) tout en pouvant tourner librement par son alésage (11a) autour de l'épaulement (13a) de la vis. La pièce (12) présente en outre des agencements (12a) coopérant avec des parties complémentaires du disque (10) pour assurer son blocage en position angulaire.

Ces parties complémentaires sont constituées par des rampes (10a) décalées angulairement (figure 8) et formées en débordement de la face du disque disposée en regard de la pièce fixe (12). Ces rampes (10a) sont engagées dans les agencements (12a) de la pièce (12), sous forme de lumières complémentaires pour assurer, comme indiqué, le blocage angulaire en position du disque (10).

D'une manière correspondante au disque (10), le bouton mobile (11) présente des rampes (11c) formées en creux (figures 6 et 7).

Les secteurs (5) et (8) présentent radialement sur leurs faces en regard, des saillies et creux alternés sous forme de crans régulièrement répartis (5c) et (8c) qui sont convenablement profilés pour coopérer ensemble dans la position embrayée ou être désaccouplés dans la position débrayée.

Pour opérer l'embrayage des secteurs (5) et (8) ce qui correspond à la position d'indexation, il suffit d'agir en rotation dans le sens approprié sur le bouton (11) équipé d'un moyen de préhension (11b), afin de dégager les rampes femelles (11c) établies sur la face du bouton en regard de la pièce (12), des rampes mâles complémentaires (10a) formées sur le disque (10) et traversant les ouvertures (12a) de la pièce (12). Dans cette position illustrée à la figure 5, la pièce (12) étant fixe en rotation par engagement de l'échancrure (12b) sur le prolongement (2b) et en translation par coincement entre le manchonentretoisé (6) et l'épaulement (13a) de la vis (13), le disque (10) sous l'effet des rampes, est déplacé en translation le long du manchon (6) en comprimant les rondelles (9) qui maintiennent en appui le secteur mobile (8) contre le secteur (5) pour l'engrènement des saillies et creux.

A noter que le secteur mobile (8) présente une saillie supérieure (8d) coopérant avec une encoche (4b) du levier (4) en vue de son entraînement concomitant en rotation.

Dans cette position embrayée, lorsqu'on agit sur le levier de changement de vitesse, on entraîne le secteur mobile (8) par sa saillie (8d) tandis que les crans dudit secteur échappent périodiquement les crans (5c) du secteur (5), à l'encontre des rondelles (9), en rendant sensibles digitalement et audibles les déplacements relatifs donc les passages de chaque vitesse (figure 5).

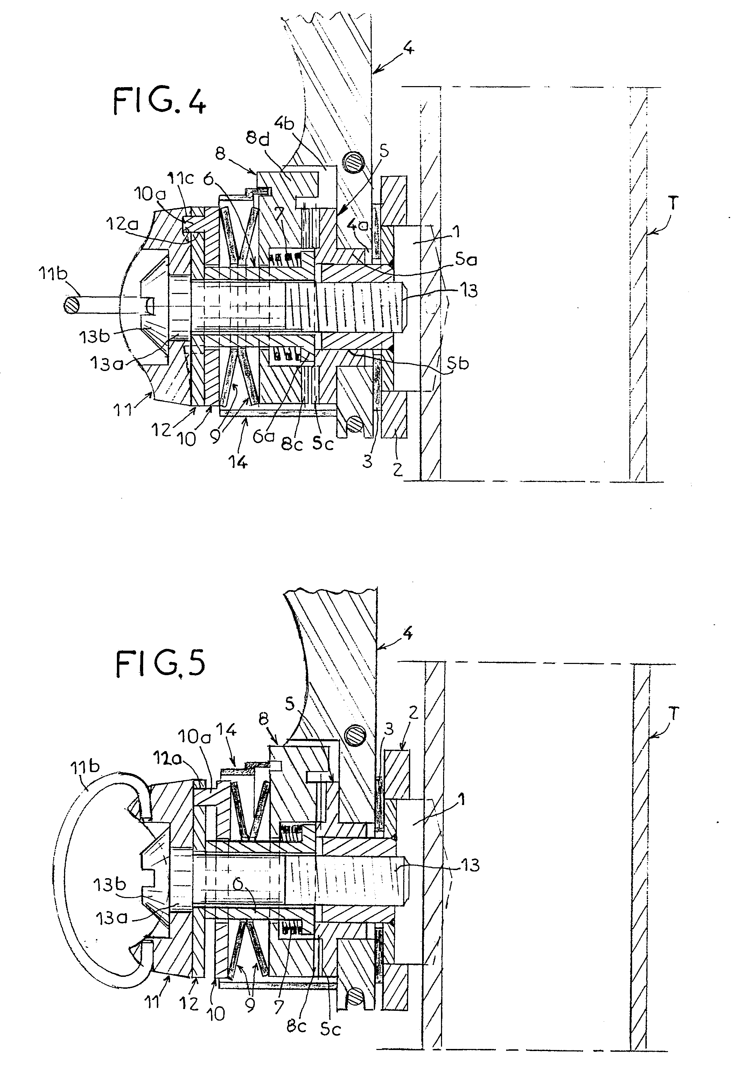

Lorsque l'on veut supprimer temporairement l'indexation des vitesses, on agit sur le bouton de manoeuvre (11) pour que les rampes mâles (10a) du disque (10) se logent dans les rampes femelles (11c) du bouton (11) correspondant à un déplacement du disque (10) inverse au précédent sous l'effet de la détente des rondelles (9). Simultanément, sous l'effet de détente du ressort (7), le secteur mobile (8) est repoussé correspondant au dégagement des crans de chacun des'deux secteurs qui sont donc désaccouplés. On peut agir librement sur le levier de changement de vitesse (figure 4).

Un carter de protection (14) est monté en combinaison avec l'ensemble du système d'indexation. A noter que le fonctionnement du système d'indexation n'est pas décrit car il ne fait pas partie de l'objet spécifique de la présente invention et est parfaitement connu par un homme du métier.

On peut, du reste, avantageusement se référer à la demande de brevet européen n. 0186602 à laquelle s'applique d'une manière préférée quoique non rigoureusement limitative, le dispositif d'embrayage objet de la présente demande. On notera simplement que la patte latérale (5d) du secteur cranté (5), en combinaison avec le prolongement (2b) du secteur de base permet un déplacement angulaire limité dudit secteur (5) correspondant, d'une manière connue, à la tension ou détension du câble.

Les avantages ressortent bien de la description. En particulier, on souligne la simplicité du dispositif qui permet d'une manière sûre et efficace, de passer rapidement de la position indexée du levier à la position libre.

**Revendications**

- 1 - Dispositif de débrayage du système d'indexation de l'organe de commande des changements de vitesse pour cycles et véhicules similaires du type de ceux conformés pour déplacer transversalement un guide-chaîne par rapport aux pignons étagés solidaires du moyeu de la roue arrière, ledit changement de vitesses étant relié par câble à un organe de commande du type à levier (4) notamment en étant conformé et agencé pour coopérer avec le système de commande, de réglage et d'indexation (5-2), aptes à assurer dans un premier temps, la mise sous tension ou détension du câble à chaque inversion du sens du levier et, dans un deuxième temps, à agir sur ledit câble pour le déplacement transversal du guide-chaîne pour le passage et la sélection d'une ou plusieurs vitesses, le système d'indexation mettant en oeuvre essentiellement un secteur cranté à course angulaire limitée (5) et un secteur cranté mobile (8) agencé pour être entraîné en rotation sous l'action du pivotement angulaire du levier (4), caractérisé en ce que le secteur mobile (8) est assujetti à des moyens de commande (11) et (10) constitués respectivement par un bouton de manoeuvre et un disque indexé angulairement dont les faces en regard présentent d'une manière complémentaire des agencements (11c) et (10a) conformés pour provoquer en combinaison avec des organes élastiques de rappel (9) et (7), l'engrènement ou pas des crans des secteurs (5) et (8) en fonction de la position angulaire dudit bouton de manoeuvre (11) pour mettre en prise ou pas les crans desdits secteurs (5) et (8) pour correspondre à une position d'indexation du levier ou à une position de débrayage du levier.

- 2 - Dispositif selon la revendication 1, caractérisé en ce que les agencements (11c) et (10a) sont constitués par des rampes décalées angulairement, lesdites rampes étant formées en creux sur le bouton de manoeuvre (11) et en relief sur le disque (10) ou inversement.

- 3 - Dispositif selon la revendication 2, caractérisé en ce que les rampes (10a) du disque (10) coopèrent avec des lumières (12a) établies dans l'épaisseur d'une pièce fixe (12) indexée angulairement en rotation en combinaison avec un secteur de base (2) monté d'une manière connue avec une position angulaire fixe sur un organe support (1) recevant l'ensemble du dispositif.

- 4 - Dispositif selon la revendication 1, caractérisé en ce que le secteur mobile cranté (8) est monté libre en rotation et en translation, en regard du secteur cranté à course angulaire limitée (5), sur un manchon entretoise (6) recevant l'organe de rappel (7) dudit secteur et des organes de mise en pression (9) coopérant en appui avec le disque (10) monté sur ledit manchon (6).

- 5 - Dispositif selon les revendications 3 et 4 ensemble, caractérisé en ce que la pièce (12) est montée sur une portée d'une vis (13) assurant l'assemblage de l'ensemble des éléments du dispositif, en appui sur le manchon (6) et/ou épaulement (13a) formé sous la tête de ladite vis, ledit épaulement recevant le bouton de manoeuvre (11).

- 6 - Dispositif selon la revendication 4, caractérisé en ce que les organes de mises en pression (9) sont constitués par deux rondelles convexes montées en opposition.

- 7 - Dispositif selon la revendication 1, caractérisé en ce que le secteur mobile cranté (8) présente une saillie (8d) coopérant avec une encoche (4b) du levier en vue de son entraînement concomitant en rotation.

- 8 - Dispositif selon la revendication1, caractérisé en ce que le secteur cranté (5) présente une patte latérale (5d) coopérant avec un prolongement (2b) du secteur de base avec capacité de déplacement angulaire limité réglable.

FIG.1

FIG.6

FIG.7

FIG.8

FIG.9

FIG.2

FIG. 3

0296079

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | EP-A-0 157 983  (SHIMANO)<br>* Figures 1-27; page 1 - page 5, ligne 11 * | 1 | B 62 M  25/04 |
| A | FR-A-2 579 163  (SHIMANO)<br>* Figures 1-15; page 5, ligne 12 - page 12, ligne 7 * | 1 | |
| A | FR-A-2 578 507  (SHIMANO)<br>* Figures 1-12; revendication 1 * | 1 | |

DOMAINES TECHNIQUES
RECHERCHES (Int. Cl.4)

B 62 M

Le présent rapport a été établi pour toutes les revendications

| Lieu de la recherche | Date d'achèvement de la recherche | Examinateur |
|---|---|---|
| LA HAYE | 05-09-1988 | VANNESTE M.A.R. |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons
 
& : membre de la même famille, document correspondant

EPO FORM 1503 03.82 (P0402)